# DEMANDE DE BREVET EUROPEEN

(11) **EP 1 927 537 A1**
(43) Date de publication de la demande: **04.06.2008**
(21) Numéro de dépôt: 07352006.6
(22) Date de dépôt: 29.11.2007
(51) Int. Cl.: B62H 3/02, B62H 5/00, G07F 17/10

(54) **Procédé de liaison/libération par rapport à un point fixe d'accrochage de station de stockage, d'un véhicule à deux roues, et station de stockage permettant de mettre en oeuvre le procédé**

(30) Priorité: 29.11.2006 FR 0610423
(71) Demandeur: Veloway, 92000 Nanterre (FR)
(72) Inventeur: Floissac, Luc, 31570 Lanta (FR); Perucca, William, 31400 Toulouse (FR)
(74) Mandataire: Morelle, Guy Georges Alain

(57) **Abrégé**

Procédé de liaison/libération par rapport à un point d'accrochage (6) fixé au sol de station (1) de stockage, d'un véhicule (2,3) de type bicyclette ou analogue,
comprenant les étapes de liaison suivantes:
- présenter le véhicule au voisinage du point fixe d'accrochage, en regard d'un emplacement de liaison (7,8) formé sur ce dernier,
- faire rouler le véhicule (2,3) sur le sol (14) jusqu'au contact entre des moyens de rail (10) de guidage dotés d'une pente (15) de guidage disposés sur le point fixe d'accrochage, et des moyens de guide (11) disposés sur la structure porteuse du véhicule,
- pousser le véhicule dans les moyens de rail de guidage, en sorte que la structure porteuse (4) du véhicule soit guidée jusqu'à des moyens de verrouillage (12) de celle-ci, se substituant ainsi au guidage du véhicule par sa roue avant (5) en décollant cette dernière du sol,
- lier le véhicule au point fixe d'accrochage par actionnement des moyens de verrouillage (12) en fin de poussée.

## Description

La présente invention se rapporte à un procédé de liaison/libération par rapport à un point fixe d'accrochage de station de stockage, d'un véhicule à deux roues, de type bicyclette ou analogue, motorisé ou non, muni d'une structure porteuse et de deux roues libres en rotation par rapport à ladite structure porteuse, ledit point fixe d'accrochage étant fixé au sol et doté d'au moins un emplacement de liaison dudit véhicule. La présente invention se rapporte en outre à une station de stockage comportant :
- au moins un véhicule à deux roues, de type bicyclette ou analogue, motorisé ou non, muni d'une structure porteuse et de deux roues libres en rotation par rapport à ladite structure porteuse,
- au moins un point d'accrochage dudit véhicule, fixé au sol et doté d'au moins un emplacement de liaison dudit véhicule, permettant de mettre en oeuvre un tel procédé.

On connaît un procédé et une station de stockage de ce type avec le document US 5,917,407 dans lequel le véhicule est guidé jusqu'à son point d'accrochage sur une borne en utilisant un rail de guidage pour la roue avant du véhicule. Le véhicule doit être présenté face à une fourche fixe de la borne et dans l'alignement de celle-ci pour que la roue avant du véhicule puisse être insérée dans la fourche en poussant celui-ci, puis une double pente guide la roue de manière ascendante jusqu'au point de verrouillage de la bicyclette en fin de la deuxième pente, ce verrouillage étant assuré par un dispositif comportant un U fixé au cadre de la bicyclette qui vient coopérer avec une gâche électrique sur la borne en vue de verrouiller la bicyclette à cette dernière. Un tel système est complexe, demande une grande précision de position dans la présentation du véhicule par rapport à la borne fixe en vue de l'associer à celle-ci.

La présente invention se propose de pallier ces inconvénients et d'apporter d'autres avantages. Plus précisément, elle consiste en un procédé de liaison/libération par rapport à un point fixe d'accrochage de station de stockage, d'un véhicule à deux roues, de type bicyclette ou analogue, motorisé ou non, muni d'une structure porteuse et de deux roues libres en rotation par rapport à ladite structure porteuse, ledit point fixe d'accrochage étant fixé au sol et doté d'au moins un emplacement de liaison dudit véhicule, caractérisé en ce qu'il comprend les étapes de liaison suivantes :
- présenter ledit véhicule au voisinage dudit point fixe d'accrochage, en regard dudit emplacement de liaison,
- faire rouler ledit véhicule sur le sol jusqu'au contact entre des moyens de rail de guidage dotés d'une pente de guidage disposés sur l'un desdits éléments point fixe d'accrochage ou structure porteuse du véhicule, et des moyens de guide différents des roues du véhicule, disposés sur l'autre desdits éléments point fixe d'accrochage ou structure porteuse du véhicule, à l'endroit dudit emplacement de liaison,
- pousser ledit véhicule afin que lesdits moyens de guide parcourent de manière ascendante la pente de guidage desdits moyens de rail de guidage, en sorte que la structure porteuse du véhicule soit guidée jusqu'à des moyens de verrouillage de celle-ci, se substituant ainsi au guidage du véhicule par sa roue avant en décollant cette dernière du sol,
- lier ledit véhicule au dit point fixe d'accrochage par actionnement desdits moyens de verrouillage en fin de poussée.

La présente invention permet de ne pas utiliser la roue avant du véhicule pour le guidage de celui-ci en position de verrouillage sur le point fixe d'accrochage. Ainsi, il est possible de ne pas présenter le véhicule dans un alignement parfait avec le point d'accrochage et le dispositif de guidage comprenant les moyens de guide et les moyens de rails, ce qui représente une meilleure ergonomie d'utilisation de la station de stockage. La roue avant étant décollée du sol, le dispositif de guidage permet d'amener le véhicule en position de verrouillage indépendamment de l'angle formé par l'axe du véhicule avec les moyens de rail de guidage au moment du contact du véhicule avec le point d'accrochage, lorsque les moyens de guide ou de rails sont disposés sur la fourche. En outre, un tel procédé rend le verrouillage du véhicule indépendant de la distance définie entre la bande de roulement de la roue avant et l'élément associé au véhicule et intervenant dans les moyens de verrouillage pour lier ledit véhicule au point d'accrochage ; ainsi, il est possible de lier des véhicules différents, tout au moins possédant des diamètres de roue avant différents, à un même emplacement de liaison sur un point fixe d'accrochage, ce qui permet d'éviter d'apparier un modèle de véhicule à un emplacement sur un point fixe d'accrochage, conférant ainsi une grande souplesse d'utilisation au procédé selon l'invention.

Selon une caractéristique avantageuse, l'étape consistant à pousser ledit véhicule consiste à appliquer une poussée à effort constant ou sensiblement constant pour l'utilisateur, conférée par une pente de guidage constante ou sensiblement constante.

Cette caractéristique permet de modérer l'effort exercé par l'opérateur pour la mise en place du véhicule en position de verrouillage sur le point fixe d'accrochage.

Selon une caractéristique avantageuse, l'étape consistant à pousser ledit véhicule, consiste à appliquer une poussée dans le sens de roulage dudit véhicule ou sensiblement dans ledit sens de roulage.

Cette caractéristique autorise une mise en place du véhicule sur le point fixe d'accrochage en position de verrouillage sans provoquer de discontinuité dans le mouvement de poussée du véhicule par rapport au mouvement de roulage dudit véhicule. L'opérateur n'a pas d'effort important à fournir, ni d'effort impliquant un changement de direction important par rapport au poussage du véhicule dans le sens de marche.

Selon une caractéristique avantageuse, l'actionnement desdits moyens de verrouillage en fin de poussée est effectué de manière automatique.

Selon une caractéristique avantageuse, le procédé selon l'invention comprend en outre les étapes de libération suivantes :
- délier ledit véhicule dudit point fixe d'accrochage par déverrouillage desdits moyens de verrouillage,
- dissocier ledit véhicule dudit point fixe d'accrochage en exerçant une traction de celui-ci en sens inverse de la poussée ascendante, en utilisant à cet effet la pente descendante de guidage et la gravité en vue de réduire l'effort de l'opérateur pour libérer le véhicule dudit point fixe d'accrochage.

L'invention se rapporte en outre à une station de stockage comportant :
- au moins un véhicule à deux roues, de type bicyclette ou analogue, motorisé ou non, muni d'une structure porteuse et de deux roues libres en rotation par rapport à ladite structure porteuse,
- au moins un point d'accrochage dudit véhicule, fixé au sol et doté d'au moins un emplacement de liaison dudit au moins un véhicule,
caractérisée en ce que ladite station de stockage comprend :
- des moyens de liaison dudit au moins un véhicule par rapport au dit point fixe d'accrochage, comportant :

- des moyens de rail de guidage disposés sur l'un desdits éléments point fixe d'accrochage ou structure porteuse du véhicule, à l'endroit dudit au moins un emplacement de liaison,
- lesdits moyens de rails de guidage comportant une pente de guidage de la structure porteuse dudit véhicule, définissant à une première extrémité de celle-ci un point de mise en contact de la structure porteuse avec ledit point fixe d'accrochage, et sensiblement à une deuxième extrémité de celle-ci un point de verrouillage de ladite structure porteuse permettant une élévation de la roue avant du véhicule au dessus du sol,
- des moyens de guide différents des roues du véhicule, disposés sur l'autre desdits éléments point fixe d'accrochage ou structure porteuse du véhicule, à l'endroit dudit emplacement de liaison, et destinés à coopérer avec lesdits moyens de rail de guidage, afin de guider le véhicule vers une position de liaison de celui-ci au dit point fixe d'accrochage,
- des moyens de verrouillage de ladite structure porteuse sur ledit point fixe d'accrochage,
- des moyens d'actionnement desdits moyens de verrouillage, coopérant avec le point de verrouillage défini à la deuxième extrémité de la pente de guidage, en sorte de permettre une liaison dudit véhicule au dit point fixe d'accrochage.

La station selon l'invention permet de mettre en oeuvre le procédé selon l'invention, et offre en particulier :
- une ergonomie améliorée par rapport aux stations de l'art antérieur, en ce que l'opérateur n'a pas besoin de présenter le véhicule exactement dans l'alignement des moyens de rails de guidage du fait de la pente de guidage apte à décoller la roue avant du sol, et à utiliser la roue arrière qui garde avantageusement le contact avec le sol pour aider à la poussée du véhicule dans les moyens de rail,
- une flexibilité d'utilisation, plusieurs modèles différents de véhicules à deux roues pouvant s'adapter à un même emplacement de liaison sur un point fixe d'accrochage du fait du positionnement de la roue avant du véhicule au dessus du sol en position de verrouillage.

Selon une caractéristique avantageuse, lesdits moyens de rails de guidage ou lesdits moyens de guide, lorsqu'ils sont disposés sur ladite structure porteuse du véhicule, sont associés à la fourche de cette dernière.

Cette caractéristique facilite la mise en position de verrouillage du véhicule sur le point d'accrochage lorsque l'axe longitudinal de ce dernier n'est pas présenté dans l'alignement des moyens de rails de guidage.

Selon une caractéristique avantageuse, ladite pente de guidage est une pente constante ou sensiblement constante.

Selon une caractéristique avantageuse, ladite pente de guidage défini une direction de guidage correspondant au sens de roulage ou sensiblement au sens de roulage dudit véhicule.

Selon une caractéristique avantageuse, la station selon l'invention comprend des moyens d'actionnement automatique desdits moyens de verrouillage lorsque lesdits moyens de guide atteignent la deuxième extrémité de ladite pente de guidage.

Selon une caractéristique avantageuse, la station selon l'invention comprend des moyens de libération dudit véhicule par rapport au dit point fixe d'accrochage, comportant des moyens de déverrouillage desdits moyens de verrouillage de ladite structure porteuse sur ledit point fixe d'accrochage.

Ces moyens de libération peuvent être de diverses natures, par exemple par carte de crédit, carte d'abonnement, monnaie, ou autre, dont l'interface de connexion est disposée sur la station de stockage séparément du point fixe d'accrochage ou sur ce dernier.

Selon une caractéristique avantageuse, lesdits moyens de rails sont disposés sur ledit point fixe d'accrochage, et lesdits moyens de guide sont disposés sur ladite structure porteuse du véhicule.

Selon une caractéristique avantageuse, lesdits moyens de rails comportent deux rainures parallèles dont les entrées respectives sont évasées, lesdits moyens de guide comportant deux reliefs destinés respectivement à pénétrer dans les deux rainures par les entrées évasées de celles-ci.

Selon une caractéristique avantageuse, lesdits deux reliefs sont disposés de part et d'autre d'un plan de symétrie longitudinal de la structure porteuse dudit véhicule.

Cette caractéristique permet d'assurer une stabilité du véhicule, notamment verticale, durant le processus de mise en place sur le point fixe d'accrochage via les moyens de guidage. Une telle stabilité conférée dès la mise en contact du véhicule sur le point d'accrochage, évite à l'opérateur de maintenir l'équilibre du deux roues durant le processus de mise en place sur le point fixe d'accrochage, cet équilibre étant assuré par le double appui fourni les deux reliefs.

Selon une caractéristique avantageuse, lesdits deux reliefs sont disposés sous un panier solidaire de la structure porteuse du véhicule, et lesdits moyens de rails adoptent la forme de canaux ouverts vers le haut.

Cette caractéristique propose un agencement spécifique permettant de mettre les reliefs-guide hors de la vue dans un souci d'esthétique, et d'utiliser les débords latéraux de la surface horizontale sous un panier destiné au transport des bagages, notamment d'un ordinateur portable, pour assurer la stabilité du véhicule lors de la mise en place en position de verrouillage sur le point fixe d'accrochage.

Selon une caractéristique avantageuse, lesdits moyens de verrouillage comportent un doigt vertical solidaire de l'un des éléments point fixe d'accrochage ou structure porteuse du véhicule, apte à coopérer avec une gâche mobile solidaire de l'autre desdits éléments point fixe d'accrochage ou structure porteuse du véhicule, en vue de verrouiller la structure porteuse du véhicule au point fixe d'accrochage.

Selon une caractéristique avantageuse, ledit doigt est solidaire de la structure porteuse du véhicule, et comporte une extrémité inférieure fixée à ladite structure porteuse et une extrémité supérieure libre, ladite gâche mobile étant disposée sur le point fixe d'accrochage.

Selon une caractéristique avantageuse, ledit doigt est disposé dans le plan longitudinal de symétrie de la structure porteuse du véhicule, entre lesdits moyens de guide définis par les deux reliefs.

Selon une caractéristique avantageuse, lesdits moyens de rails, lesdits moyens de guide, et lesdits moyens de verrouillage sont agencés en sorte de coopérer ensemble en vue d'assurer l'immobilisation de la structure porteuse par rapport au dit point fixe d'accrochage lorsque les moyens de verrouillage sont actionnés.

Cette caractéristique confère un verrouillage ferme et solide du véhicule sur le point fixe d'accrochage, en dotant l'interface entre ces deux entités d'au moins trois points distincts de contact, les deux reliefs et le doigt.

Selon une caractéristique avantageuse, lesdits moyens de rails et ladite gâche mobile sont disposés respectivement au dessus et au dessous d'une traverse fixe solidaire du point fixe d'accrochage, horizontale ou sensiblement horizontale, la structure porteuse du véhicule se répartissant en partie au dessus et au dessous de ladite traverse en sorte d'être liée à celle-ci lorsque les moyens de verrouillage sont actionnés.

Cette caractéristique confère une esthétique nouvelle au point fixe d'accrochage à partir d'une traverse horizontale par exemple en forme d'aile, tout en proposant un moyen de liaison sécurisé et extrêmement solide du véhicule de part et d'autre de cette traverse.

Selon une caractéristique avantageuse, ledit véhicule comprend en outre :
- des moyens d'antivol associés à la structure porteuse dudit véhicule et dotés d'une serrure à clé,
- des moyens de clé pour actionner lesdits moyens d'antivol via ladite serrure à clé, ladite station de stockage comprenant :

- des moyens de sécurisation desdits moyens de clé lorsque ces derniers sont dans la serrure, coopérant avec lesdits moyens de clés lorsque ledit véhicule est en position de verrouillage sur le point fixe d'accrochage, en vue d'empêcher leur retrait de la serrure.

Les moyens d'antivol permettent en particulier d'accrocher le véhicule sur un point d'accrochage différent et éloigné du point fixe d'accrochage doté des moyens de verrouillage et de guidage.

Selon une caractéristique avantageuse, ledit véhicule comprend en outre :
- des moyens de motorisation électrique,
- des moyens d'alimentation électrique rechargeable desdits moyens de motorisation électrique,
   ladite station de stockage comprenant :

- des moyens d'alimentation électrique desdits moyens d'alimentation électrique rechargeables du véhicule, et
- des moyens de connexion électrique par contacts entre lesdits moyens d'alimentation électrique de la station et lesdits moyens d'alimentation électrique rechargeables du véhicule, comportant des premiers plots électriques fixés sur lesdits moyens de rail de guidage et des deuxièmes plots électriques fixés sur lesdits moyens de guide, aptes à entrer en contacts lorsque ledit véhicule est en position de verrouillage sur ledit point d'accrochage.

Cette caractéristique permet de rendre la station de stockage selon l'invention compatible avec des véhicules à deux roues électriques qui peuvent recharger leur accumulateurs lorsqu'ils sont verrouillés sur le point d'accrochage fixe.

Selon une caractéristique avantageuse, ledit véhicule comprend en outre des moyens d'identité, et ladite station de stockage comprend des moyens de lecture desdits moyens d'identité, lorsque ledit véhicule est en position de verrouillage.

Cette caractéristique permet de gérer l'utilisation des véhicules en permettant l'identification du véhicule qui est verrouillé sur le point fixe d'accrochage, en vue d'enregistrer la restitution d'un véhicule précis.

D'autres caractéristiques et avantages apparaîtront à la lecture qui suit d'un exemple de mode de réalisation d'un procédé de liaison/libération d'un véhicule à deux roues par rapport à un point fixe d'accrochage de station de stockage, et d'une station de stockage selon l'invention, accompagné des dessins annexés, exemple donné à titre illustratif non limitatif.

Les figures 1 à 3 représentent de manière schématique une illustration de plusieurs étapes d'un exemple de mode de réalisation d'un procédé selon l'invention de liaison, par rapport à un point fixe d'accrochage de station de stockage, d'un véhicule à deux roues, de type bicyclette ou analogue.

La figure 4 représente une vue en perspective de l'avant partielle d'un exemple de mode de réalisation d'un véhicule de type bicyclette ou analogue, muni d'une structure porteuse et de deux roues libres en rotation par rapport à ladite structure porteuse, constitutif de la station de stockage selon l'invention.

La figure 5 représente une vue en perspective de l'avant, éclatée et partielle, d'un exemple de mode de réalisation d'une station de stockage selon l'invention, comportant deux véhicules à deux roues.

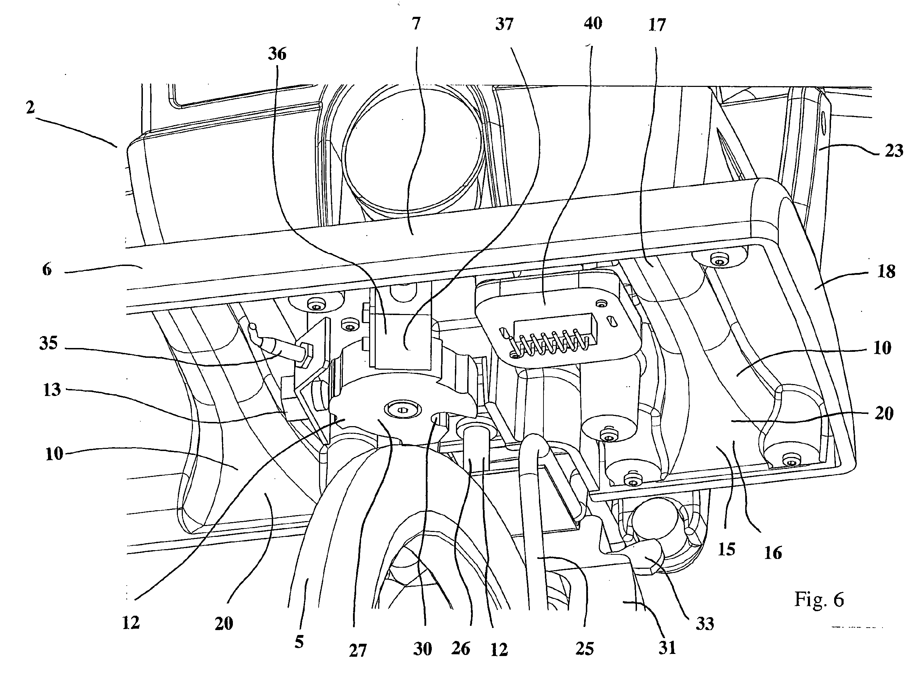

La figure 6 représente un détail agrandi relatif au véhicule de droite de la figure 5.

La figure 7 représente une vue de gauche en coupe longitudinale selon un plan de symétrie longitudinale du véhicule de droite représenté sur la figure 5 ou 6.

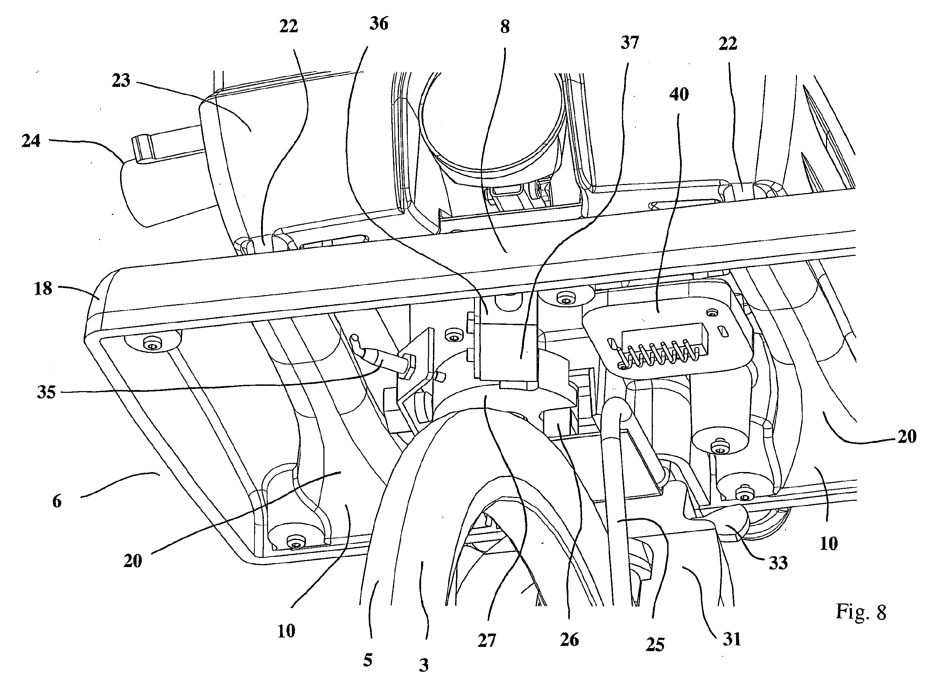

La figure 8 représente un détail agrandi relatif au véhicule de gauche de la figure 5.

La figure 9 représente une vue de droite en coupe longitudinale selon un plan de symétrie longitudinale du véhicule de gauche représenté sur la figure 5 ou 8.

La figure 10 représente une variante de l'exemple de station selon la figure 5.

La figure 11 montre une vue en perspective d'un exemple de mode de réalisation d'un point d'accrochage seul pour deux vélos.

La station 1 représenté sur les figures comporte :
- deux véhicules 2, 3 à deux roues, de type bicyclette ou analogue, motorisé ou non, muni chacun d'une structure porteuse 4 et de deux roues libres 5 en rotation par rapport à la structure porteuse 4,
- un point d'accrochage 6 des deux véhicules droite 2 et gauche 3, fixé au sol 14 et doté de deux emplacements 7, 8 de liaison des deux véhicules 2, 3 respectivement,
- des moyens de liaison 9 de chacun des véhicules par rapport au point fixe d'accrochage 6, comportant pour un emplacement 7 ou 8 :

- des moyens de rail 10 de guidage disposés avantageusement sur le point fixe d'accrochage 6, à l'endroit de l'emplacement de liaison 7, 8 de chacun des véhicules,
- les moyens de rails 10 de guidage à chacun des emplacements de liaison comportant une pente 15 de guidage de la structure porteuse 4 du véhicule destiné à être lié au point d'accrochage 6, définissant à une première 16 extrémité de celle-ci un point de mise en contact de la structure porteuse 4 avec le point fixe d'accrochage 6, lorsque les deux roues du véhicule sont en contact avec le sol 14, et sensiblement à une deuxième 17 extrémité de celle-ci un point de verrouillage de la structure porteuse 4 permettant une élévation de la roue avant 5 du véhicule au dessus du sol 14,
- des moyens de guide 11 différents des roues 5 du véhicule, disposés avantageusement sur la structure porteuse 4 du véhicule 2, 3, à l'endroit de l'emplacement de liaison 7, 8, et destinés à coopérer avec les moyens de rail de guidage 10 d'un emplacement de liaison, afin de guider le véhicule vers une position de liaison de celui-ci au point fixe d'accrochage,
- des moyens de verrouillage 12 de la structure porteuse 4 sur le point fixe d'accrochage,
- des moyens d'actionnement 13 des moyens de verrouillage 12, coopérant avec le point de verrouillage défini à la deuxième extrémité de la pente 15 de guidage, en sorte de permettre une liaison du véhicule au point fixe d'accrochage.

Les véhicules de la station peuvent être en nombre supérieur à deux, et la station elle-même peut comprendre un ou plusieurs points d'accrochage, chacun comprenant lui-même un ou plusieurs emplacements de liaison pour un ou plusieurs véhicules respectivement. Les véhicules sont avantageusement des véhicules de type vélos, et peuvent être notamment motorisés par une source d'énergie électrique qui sera rechargée lorsque le véhicule est lié au point d'accrochage, en position sur son emplacement de liaison. Les véhicules de type vélos peuvent être des vélos conventionnels, notamment différents en taille de cadre et/ou de roues, et seront avantageusement tous équipés selon l'exemple décrit de moyens de guide 11 et de moyens entrant dans la constitution des moyens de verrouillage, tous identiques afin qu'un vélo soit apte à être lié à n'importe quel emplacement de n'importe quel point d'accrochage, comme décrit plus loin.

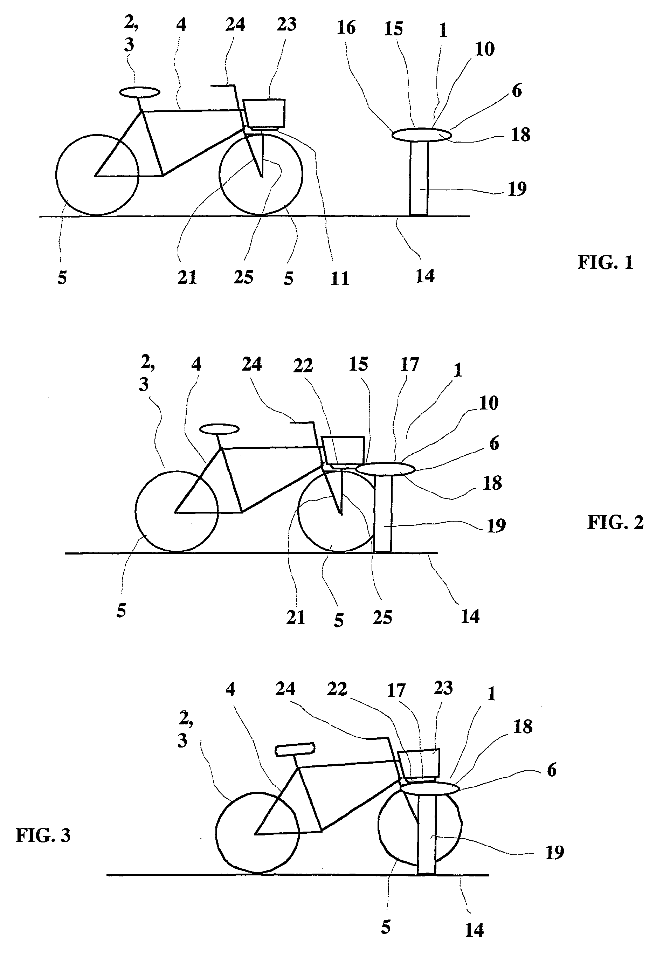

Un point d'accrochage 6, tel que représenté sur les figures 1 à 3, des deux véhicules droite 2 et gauche 3, comprend avantageusement un poteau 19 vertical fixé au sol 14 et doté à son extrémité supérieure d'une traverse 18 s'étendant horizontalement de part et d'autre du poteau. Sur la traverse, sont ménagés deux emplacements 7, 8 de liaison de deux véhicules 2, 3 respectivement, de chaque côté du poteau. Les moyens de liaison d'un véhicule sont disposés dans la traverse dans la mesure du possible afin de les protéger de l'eau notamment et du vandalisme, et avantageusement seules les interfaces avec le véhicule à lier apparaissent à l'extérieur de la traverse. Il est à noter que l'on peut envisager un point d'accrochage muni de plusieurs poteaux, alignés ou pas, reliés par une traverse horizontale, entre lesquels un ou plusieurs emplacements de liaison de véhicules sont ménagés sur la traverse. Les points d'accrochage d'un réseau de stations peuvent être différents, mais comporteront tous des moyens de liaison identiques afin de recevoir n'importe quel vélo du réseau comportant lesdits moyens de guide et de liaison.

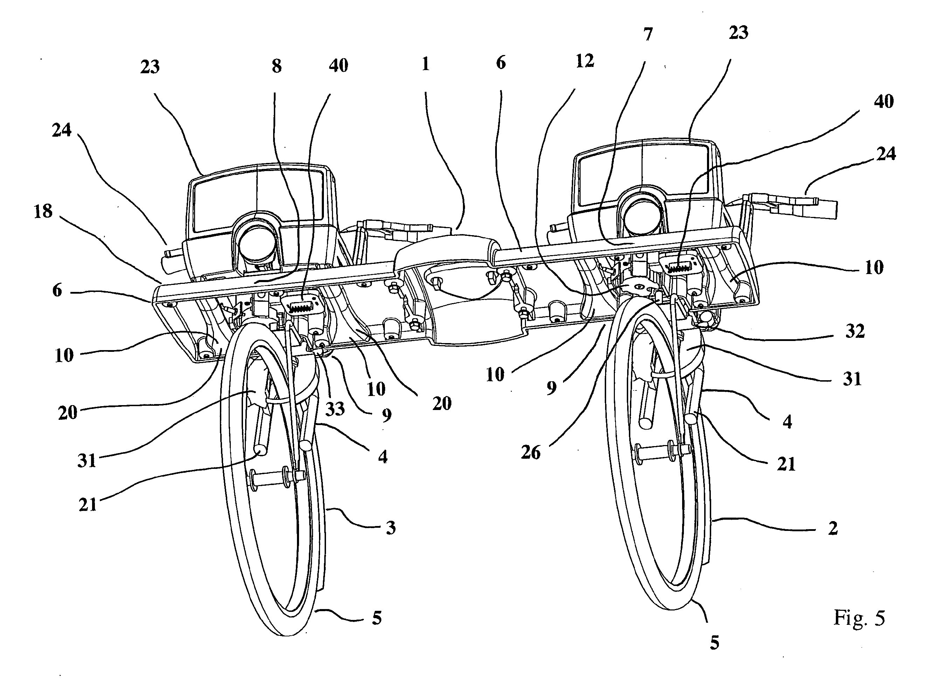

Les moyens de rail 10 de guidage disposés avantageusement sur le point fixe d'accrochage 6, à l'endroit de chaque emplacement de liaison 7 ou 8 d'un véhicule, comportent de préférence deux rainures 20 parallèles dont les entrées respectives sont évasées, comme représenté sur la figure 5 en vue de dessous, la traverse 18 étant représentée avec une plaque de fermeture inférieure retirée, pour montrer l'intérieur de celle-ci. L'évasement de l'entrée des rainures 20 permet une précision moins grande pour la présentation du vélo devant celles-ci en vue de positionner ce vélo en position de liaison sur l'emplacement approprié du point fixe d'accrochage. Les rainures de guidage sont disposées transversalement à l'axe longitudinal de la traverse afin de permettre une arrivée du vélo sur le point d'accrochage selon une direction perpendiculaire à la traverse, la pente de guidage constituée par le fond de la rainure étant ainsi définie dans une direction de guidage correspondant au sens de roulage ou sensiblement au sens de roulage du véhicule. Cette pente de guidage peut être avantageusement constante ou sensiblement constante, ou adopter une ligne variable appropriée, par exemple une pente importante à l'attaque de la rainure et se réduisant ensuite vers le point de verrouillage afin que l'essentiel du poids du vélo soit repris par la traverse et non par l'opérateur empêchant le vélo de glisser pour ressortir de la rainure en marche arrière.

Les moyens de guide 11 sont avantageusement disposés sur la structure porteuse 4 du véhicule, associés de préférence à la fourche 21 de celle-ci, et comportent également de préférence deux reliefs 22 distincts destinés respectivement à pénétrer dans les deux rainures 20 par les entrées évasées de celles-ci, les deux reliefs 22 étant disposés de part et d'autre d'un plan de symétrie longitudinal de la structure porteuse 4 du véhicule. Les deux reliefs sont disposés avantageusement sous un panier 23 solidaire de la structure porteuse 4 du véhicule 2, 3, les moyens de rails constitués de deux rainures 20 adoptant la forme de canaux ouverts vers le haut. Chaque relief 22 adopte par exemple la forme d'une nervure s'étendant vers le bas sous le panier et dans la direction longitudinale en sorte d'être parallèle au plan de symétrie longitudinal de la structure porteuse 4 lorsque le guidon du véhicule est droit. Les nervures 22 étant associées à la fourche 21 et donc au guidon 24, elles tournent avec ce dernier en sorte de faciliter le positionnement du vélo devant les rainures 20 de guidage associés au point d'accrochage. Les nervures 22 peuvent être formées directement sur le dessous du panier 23 lui-même solidaire et fixé au bloc fourche-guidon de la structure porteuse 4, par exemple par l'intermédiaire d'une structure rigide 25 rapportée et fixée au vélo comme représenté sur les figures.

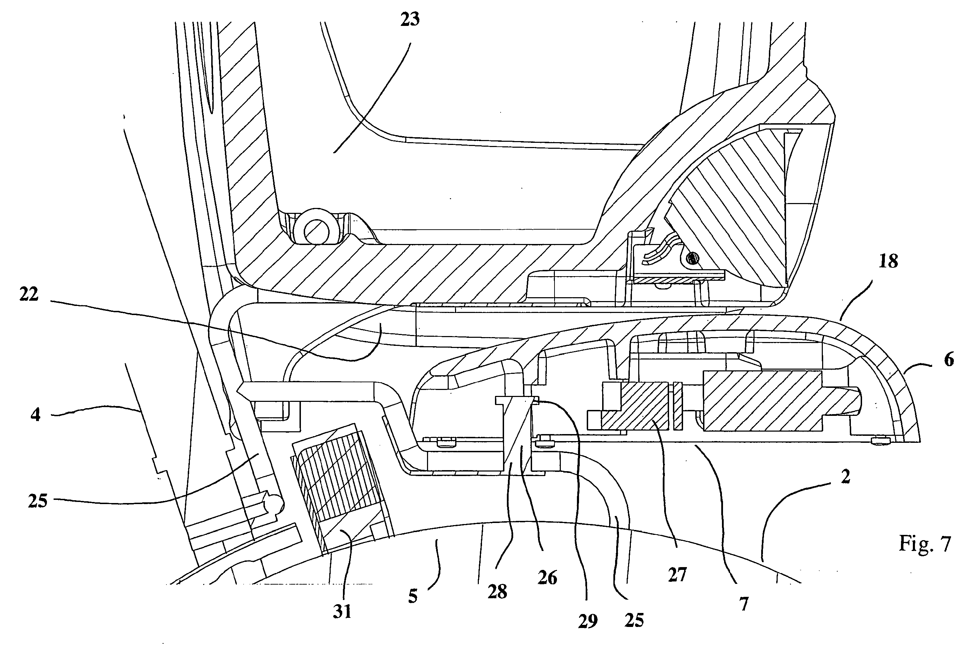

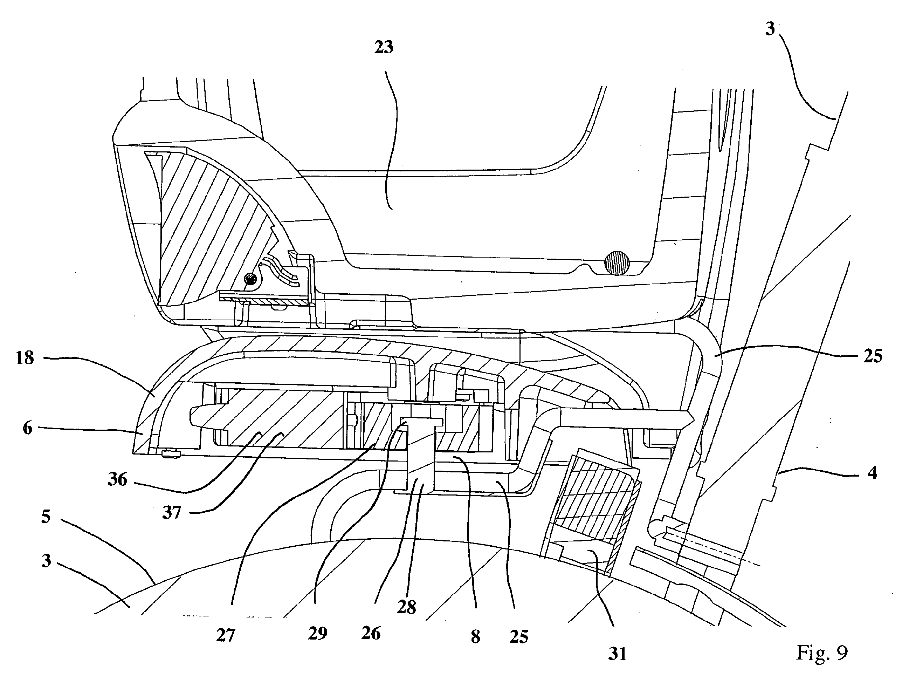

Les moyens de verrouillage 12 de la structure porteuse 4 sur le point fixe d'accrochage 6, comportent avantageusement un doigt 26 vertical solidaire de la structure porteuse 4 du véhicule 2, 3, apte à coopérer avec une gâche 27 mobile solidaire du point fixe 6 d'accrochage, en vue de verrouiller la structure porteuse 4 du véhicule 2, 3 au point fixe d'accrochage 6, plus particulièrement à un emplacement 7 ou 8 de liaison sur le point d'accrochage. Le doigt 26 solidaire de la structure porteuse 4 du véhicule 2 ou 3, comporte avantageusement une extrémité inférieure 28 fixée à la structure porteuse 4 et une extrémité supérieure 29 libre, comme plus particulièrement représenté sur la figure 7 ou 9. Le doigt 26 est de préférence disposé dans le plan longitudinal de symétrie de la structure porteuse 4 du véhicule 2 ou 3, entre les moyens de guide 11 définis par les deux nervures 22 comme décrit ci-dessus. Comme représenté sur la figure 7 ou 9, le doigt 26 est par exemple fixé verticalement sur la structure rigide 25 solidaire du bloc fourche-guidon de la structure porteuse 4, en sorte que l'extrémité supérieure 29 du doigt 26 soit située entre les nervures 22 guides et à distance sous celle-ci de façon que les nervures 22 puissent glisser sur le dessus de la traverse 18 du point d'accrochage dans les rainures de guidage, et que le doigt 26 puisse s'introduire simultanément sous la traverse 18 en vue de s'associer avec la gâche mobile 27 également placée sous la traverse 18 , pour permettre un verrouillage de la structure porteuse du véhicule sur le point d'accrochage. Ainsi, les moyens de rails 10 et la gâche mobile 27 sont disposés respectivement au dessus et au dessous de la traverse 18 fixe solidaire du point fixe d'accrochage 6, de préférence horizontale ou sensiblement horizontale, la structure porteuse du véhicule se répartissant alors avantageusement en partie au dessus et au dessous de la traverse 18 en sorte d'être liée à celle-ci lorsque les moyens de verrouillage sont actionnés, comme représenté sur la figue 9.

La gâche mobile 27 peut être de tout type connu, par exemple une gâche rotative électromagnétique dont l'axe de rotation est parallèle à l'axe du doigt 26, soit vertical, et adopte la forme d'un cylindre échancré rotatif, le doigt 26 s'introduisant dans l'échancrure 30 de la gâche lorsque le vélo est poussé dans les moyens de rails 10, puis la gâche achevant sa rotation, avec le doigt 26 emprisonné dans l'échancrure, jusqu'au point de verrouillage, comme représenté sur la figure 9, des moyens d'actionnement 13 automatique des moyens de verrouillage 12 entrant par exemple en action lorsque les moyens de guide 11 atteignent la deuxième extrémité 17 de la pente 15 de guidage. Il est à noter que les moyens d'actionnement automatique des moyens de verrouillage peuvent entrer en action en vue de verrouiller le vélo indépendamment des moyens de guide 11, par exemple par un processus de verrouillage de la gâche intrinsèque à celle-ci. A ce sujet, le point de verrouillage tel que défini plus haut peut ne pas correspondre exactement à l'extrémité supérieure de la pente 15 de guidage des moyens de rails 10, et être situé à une certaine distance de cette extrémité, dans la mesure où, à l'endroit du point de verrouillage défini sur la pente de guidage, la structure du vélo est surélevée par rapport au sol de telle que la roue avant est décollée du sol.

Les moyens de verrouillage peuvent de manière alternative être réalisés au moyen d'une ventouse magnétique, de toute manière connue. Le doigt et la gâche mobile de l'exemple ci-dessus sont ainsi remplacés respectivement par deux plots aptes à être liés entre eux par une force magnétique et constituer ainsi les moyens de verrouillage.

Les moyens de libération 35 du véhicule 2 ou 3 par rapport au point fixe d'accrochage 6, comportent des moyens de déverrouillage 36 des moyens de verrouillage de la structure porteuse 4 sur le point fixe d'accrochage, par exemple un électro-aimant 37 agissant sur la gâche mobile 27 pour débloquer le doigt 26.

Ainsi, comme plus particulièrement représenté sur les figures 7 et 9, les moyens de rails 10, les moyens de guide 22, et les moyens de verrouillage 12 sont avantageusement agencés en sorte de coopérer ensemble en vue d'assurer l'immobilisation de la structure porteuse 4 d'un vélo 2 ou 3 par rapport au point fixe d'accrochage 6 lorsque les moyens de verrouillage sont actionnés. A cet effet, les moyens de verrouillage 12 peuvent à eux seuls assurer une immobilisation de la structure porteuse du vélo dans l'espace, mais les moyens de guidage et de guide peuvent avantageusement coopérer avec les moyens de verrouillage 12 pour améliorer la stabilité du vélo lié au point d'accrochage, soit dans l'exemple représenté en fournissant une butée plane verticale (grâce aux moyens de rails) vers le bas pour la structure, via les moyens de guide du vélo qui définissent avantageusement une surface. De manière avantageuse, les moyens de rail 10 peuvent comporter des butées de fin de courses pour les moyens de guide 22, par exemple grâce aux deux nervures 22 venant prendre appui contre deux butées formées en bout des deux rainures 20, respectivement ; ainsi, une telle configuration confère une excellente rigidité de la fixation du vélo dans le plan horizontal, empêchant la mobilité de la roue avant autour de l'axe de rotation du guidon, lorsque ces butées de fin de course coopèrent avec les moyens de verrouillage. Le vélo garé sur son point d'accrochage présente ainsi une très bonne stabilité.

Le vélo 2 ou 3 représenté comporte en outre avantageusement :
- des moyens d'antivol 31 associés à la structure porteuse 4 du véhicule 2 ou 3 et dotés d'une serrure 32 à clé,
- des moyens de clé 33 pour actionner les moyens d'antivol 31 via la serrure 32 à clé, et la station de stockage 1 comprend :

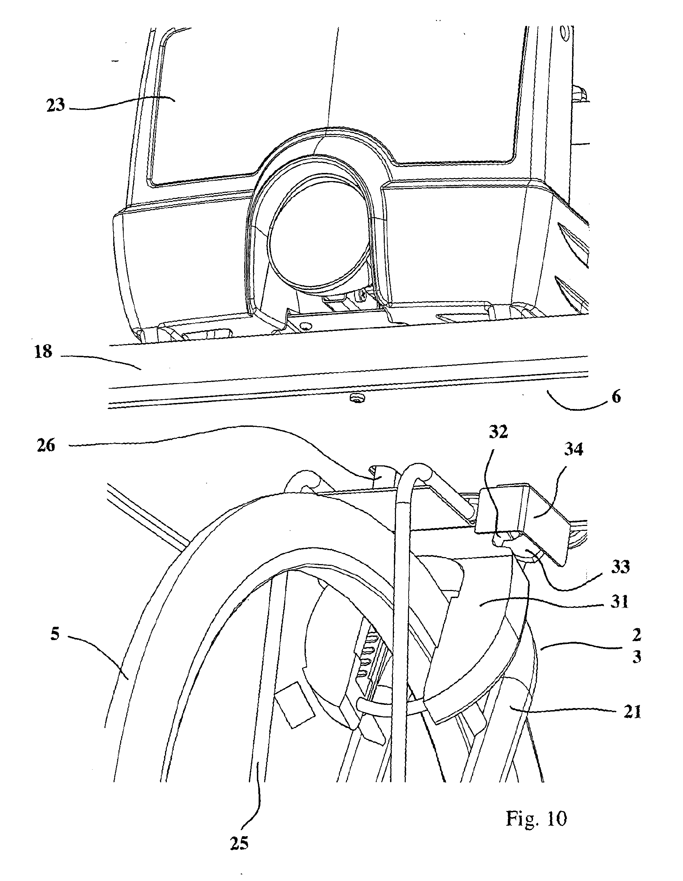

- des moyens de sécurisation 34 des moyens de clé 33 lorsque ces derniers sont introduits dans la serrure 32, comme représenté sur la figure 10, coopérant avec les moyens de clés lorsque le véhicule est en position de verrouillage sur le point fixe d'accrochage 6, en vue d'empêcher leur retrait de la serrure 32.

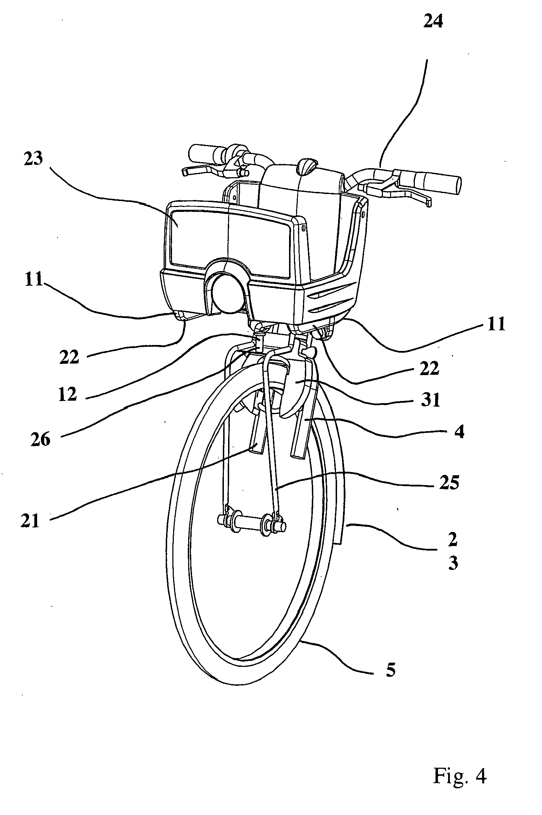

Les moyens d'antivol 31 peuvent par exemple être constitués d'un antivol en forme de fer à cheval de type connu, fixé sur la fourche 21 du vélo 2 ou 3 avec la roue qui traverse la section interne du fer à cheval comme représenté sur la figure 4 par exemple. Cet antivol 31 de manière connue comporte avantageusement une double fonction, à savoir une fonction de verrouillage du U à travers les rayons, et une fonction fournie par un câble souple (non représenté) logé à l'intérieur de la structure en fer à cheval de l'antivol, dont une extrémité est fixé à l'antivol et dont l'autre extrémité est libre, par exemple pour assurer le tour d'un point fixe et être ensuite accrochée à la structure du fer à cheval, protégeant ainsi le vélo du vol par attache de celui-ci à un point fixe, qui est différent du point fixe d'accrochage décrit plus haut dans le cadre de l'invention. La station de stockage selon l'invention peut se multiplier autant de fois que nécessaire, en réseau dans une ville par exemple, afin de proposer en plusieurs endroits de la ville une offre de vélos en location ou analogue. Une fois le vélo retiré de la station selon l'invention par un utilisateur, ce dernier doit pouvoir sécuriser le vélo emprunté en un autre lieu qu'une station de stockage du réseau, et c'est la fonction première des moyens antivol 31. La clé 33 est rendue prisonnière de la serrure 32 par le cache 34 fixé sur le point fixe d'accrochage et qui vient recouvrir la clé pour la rendre inaccessible à un utilisateur, lorsque le vélo est en position de verrouillage sur son emplacement, de sorte qu'il est inutile, pour le gestionnaire des stations de stockage des vélos, d'avoir à gérer ces clés, ces dernières restant tout le temps en place dans leur serrure.

Le vélo 2, 3 peut comprendre en outre :
- des moyens de motorisation électrique (non représentés),
- des moyens d'alimentation électrique rechargeable (non représentés) des moyens de motorisation électrique,
   la station de stockage 1 comprenant :

- des moyens d'alimentation électrique (non représentés) des moyens d'alimentation électrique rechargeables du véhicule, et
- des moyens de connexion électrique (non représentés) par contacts entre les moyens d'alimentation électrique de la station et les moyens d'alimentation électrique rechargeables du véhicule, comportant avantageusement des premiers plots électriques fixés sur les moyens de rail 10 de guidage et des deuxièmes plots électriques fixés sur les moyens de guide 11, aptes à entrer en contacts lorsque le véhicule 2, 3 est en position de verrouillage sur le point d'accrochage 6. Les moyens d'alimentation électrique rechargeables du véhicule peuvent par exemple être logés dans le panier 23 et être mis en charge lorsque le véhicule est lié à la station de stockage. A cet effet, le point d'accrochage qui est déjà alimenté en électricité pour le fonctionnement des moyens de verrouillage comme décrit plus haut, peut également être alimenté en électricité pour la recharge des accumulateurs d'électricité des vélos.

Selon une solution avantageuse, le véhicule 2, 3 comprend en outre des moyens d'identité, et la station de stockage comprend des moyens de lecture des moyens d'identité, lorsque ledit véhicule est en position de verrouillage. Le système d'identification d'un vélo peut se faire par la technologie RFID ou analogue associé à la station de stockage 1, un code d'identité étant attaché à chaque vélo, et un lecteur 40 de code étant monté à chaque emplacement de liaison d'un véhicule sur un point d'accrochage 6. Le code d'identité doit être placé sur le vélo en regard du lecteur 40 lorsque le vélo est en position de verrouillage sur le point fixe d'accrochage. Par exemple, le lecteur peut être placé sur le dessus de la traverse 18 et le code sous le panier 23 du véhicule 2, 3, en sorte que le code soit en face du lecteur et lisible par exemple lorsque les moyens de verrouillage ont été actionnés. Le lecteur 40 sera de préférence protégé dans la traverse, et le code sera de préférence protégé dans la structure du panier. Une carte magnétique personnalisée permettra l'identification de l'usager et un système informatique approprié associé pourra avantageusement permettre la traçabilité des déplacements du vélo d'une station de stockage auprès de laquelle il aura été retiré à une station de stockage à laquelle il aura été rendu.

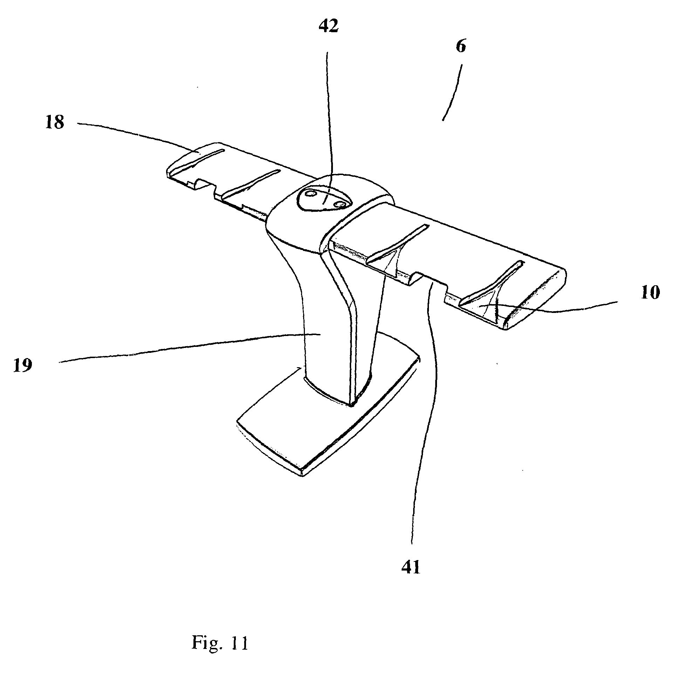

La figure 11 montre une vue en perspective d'un exemple de point d'accrochage 6 seul pour deux vélos (non représentés) avec une traverse 18 horizontale suspendue au centre de laquelle s'étend un pied 19 jusqu'au sol pour maintenir la traverse. La figure 11 montre les rainures 10 évasées avec une pente ascendante à partir de l'évasement. On voit également une échancrure 41 entre deux rainures, pour chaque emplacement de liaison, permettant le passage du doigt de verrouillage porté par le vélo.

Le panier 23 porte bagage peut par exemple être réalisé selon la technique de rotomoulage, notamment en polyéthylène, et être fixé sur la structure rigide 25 et également au guidon du vélo. Les nervures 22 seront par exemple formées sous le fond du panier dans la même matière que ce dernier, soit une matière adapté au frottement provoqué par la mise en place du vélo dans les rails. Comme représenté sur les figures, les faces latérales du panier 23 sont de préférence échancrées afin de permettre le positionnement d'objets encombrants, par exemple au format d'un ordinateur portable, qui seront retenus grâce à un système de sangle élastique. Des trous seront pratiqués en fond de panier pour l'évacuation de l'eau. La structure rigide 25 rapportée au vélo pourra avantageusement assumer la fonction de support du panier réalisé en matière plastique afin de renforcer sa résistance, tout en dégageant le doigt 26 afin de rendre sont introduction possible dans la gâche mobile comme expliqué plus haut. La structure rigide rapportée 25 sera de préférence fixée au vélo par un moyen sécurisé, par exemple des vis inviolables. Les pièces de structure du point d'accrochage 6 peuvent être avantageusement réalisées dans un alliage léger métallique, obtenu à partir de l'aluminium ou en aluminium.

Un exemple de procédé de liaison/libération par rapport à un point fixe d'accrochage 6 d'une station de stockage 6 par exemple comme décrit plus haut, d'un véhicule 2, 3 à deux roues, de type bicyclette ou analogue, motorisé ou non, muni d'une structure porteuse 4 et de deux roues libres 5 en rotation par rapport à la structure porteuse, le point fixe d'accrochage 6 étant fixé au sol 14 et doté d'au moins un emplacement 7, 8 de liaison du véhicule, va maintenant être décrit : le procédé comporte les étapes suivantes :
- présenter le véhicule 2, 3 au voisinage du point fixe d'accrochage 6, en regard de l'emplacement de liaison 7 ou 8 prévu à cet effet, en présentant le véhicule face à la traverse, c'est à dire l'axe longitudinal du véhicule le plus perpendiculaire possible à l'axe longitudinal de la traverse, en acceptant un écart d'angle important sachant que c'est l'ensemble fourche et guidon qui doit se présente face à la traverse, l'axe longitudinal du véhicule pouvant former un certain angle par rapport au guidon,
- faire rouler le véhicule 2, 3 sur le sol 14 jusqu'au contact entre les moyens de rail 10 de guidage, présentant une entrée évasée et dotés d'une pente 15 de guidage, disposés de préférence sur le point fixe d'accrochage 6, et les moyens de guide 11 disposés sur la structure porteuse 4 du véhicule, à l'endroit de l'emplacement de liaison 7, 8,
- pousser ensuite le véhicule 2, 3 afin que les moyens de guide 11 parcourent de manière ascendante la pente 15 de guidage des moyens de rail 10 de guidage, par exemple en appliquant une poussée, de préférence dans le sens du roulage, à effort constant ou sensiblement constant, en sorte que la structure porteuse 4 du véhicule soit guidée jusqu'aux moyens de verrouillage 12 de celle-ci, se substituant ainsi au guidage du véhicule par sa roue avant en décollant cette dernière du sol 14,
- lier le véhicule 2, 3 au point fixe d'accrochage 6 par actionnement des moyens de verrouillage en fin de poussée, avantageusement de manière automatique, par exemple par un capteur de fin de poussée actionnant la gâche mobile 27.

Le véhicule est ainsi lié au point fixe d'accrochage.

Pour libérer le véhicule, il convient pour un utilisateur ou un opérateur de procéder aux étapes suivantes selon un mode de réalisation d'un procédé de libération suivant l'invention :
- délier le véhicule 2, 3 du point fixe 6 d'accrochage par déverrouillage des moyens de verrouillage, par exemple, selon la gestion de la station de stockage par action sur un organe de libération du verrouillage, de type bouton de manoeuvre, Carte Bancaire, badge, code personnel par exemple obtenu dynamiquement via un téléphone mobile, etc ...
- dissocier le véhicule 2, 3 du point fixe d'accrochage 6 en exerçant une traction de celui-ci en sens inverse de la poussée ascendante exercée pour le verrouiller, en utilisant à cet effet la pente descendante de guidage et la gravité en vue de réduire l'effort de l'opérateur pour libérer le véhicule du point fixe d'accrochage.

La station de stockage pourra fonctionner de manière automatique en permettant de mettre des vélos à disposition des usagers, en particulier pour les applications d'équipements urbains. Comme décrit plus haut, elle comprend une partie fixe ou point d'accrochage pouvant être assimilé à du mobilier urbain, et une partie mobile associée à chacun des véhicules d'une pluralité de véhicules constituant un parc mis à la disposition des usagers en divers points d'un centre urbanisé. L'interface 42 homme machine d'un point d'accrochage 6 se situe en partie centrale du point d'accrochage, et est commune à plusieurs vélos : elle peut comporter un afficheur, un clavier numérique et un lecteur de badge magnétique ou sans contact, ou bien de manière alternative de simples boutons de libération des vélos lorsque la transaction de prêt ou de location du vélo s'est effectuée sur un autre dispositif, comme par exemple, une borne de Carte Bancaire ou une borne séparée pour lecteur magnétique ou sans contact.

Il y a lieu de noter que la traverse 18 comportant les emplacements de liaison des vélos peut de manière alternative être fixée à un mur de bâtiment.

## Revendications

1. Procédé de liaison/libération par rapport à un point fixe d'accrochage (6) de station (1) de stockage, d'un véhicule (2, 3) à deux roues, de type bicyclette ou analogue, motorisé ou non, muni d'une structure porteuse (4) et de deux roues libres (5) en rotation par rapport à ladite structure porteuse, ledit point fixe d'accrochage étant fixé au sol (14) et doté d'au moins un emplacement (7, 8) de liaison dudit véhicule,
***caractérisé en ce qu'***il comprend les étapes de liaison suivantes :
- présenter ledit véhicule au voisinage dudit point fixe d'accrochage, en regard dudit emplacement de liaison,
- faire rouler ledit véhicule (2, 3) sur le sol (14) jusqu'au contact entre des moyens de rail (10) de guidage dotés d'une pente (15) de guidage disposés sur l'un desdits éléments point fixe d'accrochage ou structure porteuse du véhicule, et des moyens de guide (11) différents des roues du véhicule, disposés sur l'autre desdits éléments point fixe d'accrochage ou structure porteuse du véhicule, à l'endroit dudit emplacement de liaison,
- pousser ledit véhicule afin que lesdits moyens de guide parcourent de manière ascendante la pente de guidage desdits moyens de rail de guidage, en sorte que la structure porteuse du véhicule soit guidée jusqu'à des moyens de verrouillage (12) de celle-ci, se substituant ainsi au guidage du véhicule par sa roue avant en décollant cette dernière du sol,
- lier ledit véhicule au dit point fixe d'accrochage par actionnement desdits moyens de verrouillage en fin de poussée.

2. Procédé suivant la revendication 1, ***caractérisé en ce que*** l'étape consistant à pousser ledit véhicule (2, 3) consiste à appliquer une poussée à effort constant ou sensiblement constant pour l'utilisateur, conférée par une pente de guidage constante ou sensiblement constante.

3. Procédé suivant la revendication 1 ou 2, ***caractérisé en ce que*** l'étape consistant à pousser ledit véhicule, consiste à appliquer une poussée dans le sens de roulage dudit véhicule ou sensiblement dans ledit sens de roulage.

4. Procédé suivant l'une quelconque des revendications 1 à 3, ***caractérisé en ce que*** l'actionnement desdits moyens de verrouillage en fin de poussée est effectué de manière automatique.

5. Procédé suivant l'une quelconque des revendications 1 à 4, ***caractérisé en ce qu'***il comprend en outre les étapes de libération suivantes :
- délier ledit véhicule (2, 3) dudit point fixe d'accrochage (6) par déverrouillage desdits moyens de verrouillage (12),
- dissocier ledit véhicule dudit point fixe d'accrochage en exerçant une traction de celui-ci en sens inverse de la poussée ascendante, en utilisant à cet effet la pente descendante de guidage et la gravité en vue de réduire l'effort de l'opérateur pour libérer le véhicule dudit point fixe d'accrochage.

6. Station de stockage (1) comportant :
- au moins un véhicule (2, 3) à deux roues, de type bicyclette ou analogue, motorisé ou non, muni d'une structure porteuse (4) et de deux roues libres (5) en rotation par rapport à ladite structure porteuse,
- au moins un point d'accrochage (6) dudit au moins un véhicule, fixé au sol (14) et doté d'au moins un emplacement (7, 8) de liaison dudit au moins un véhicule,
***caractérisée en ce que*** ladite station de stockage comprend :
- des moyens de liaison (9) dudit au moins véhicule par rapport au dit point fixe d'accrochage, comportant :
- des moyens de rail (10) de guidage disposés sur l'un desdits éléments point fixe d'accrochage ou structure porteuse du véhicule, à l'endroit dudit au moins un emplacement de liaison,
- lesdits moyens de rails de guidage comportant une pente (15) de guidage de la structure porteuse dudit véhicule, définissant à une première (16) extrémité de celle-ci un point de mise en contact de la structure porteuse avec ledit point fixe d'accrochage, et sensiblement à une deuxième (17) extrémité de celle-ci un point de verrouillage de ladite structure porteuse permettant une élévation de la roue avant du véhicule au dessus du sol,
- des moyens de guide (11) différents des roues du véhicule, disposés sur l'autre desdits éléments point fixe d'accrochage ou structure porteuse du véhicule, à l'endroit dudit au moins un emplacement de liaison, et destinés à coopérer avec lesdits moyens de rail de guidage, afin de guider le véhicule vers une position de liaison de celui-ci au dit point fixe d'accrochage,
- des moyens de verrouillage (12) de ladite structure porteuse sur ledit point fixe d'accrochage,
- des moyens d'actionnement (13) desdits moyens de verrouillage, coopérant avec le point de verrouillage défini à la deuxième extrémité de la pente de guidage, en sorte de permettre une liaison dudit véhicule au dit point fixe d'accrochage.

7. Station de stockage suivant la revendication 6, ***caractérisée en ce que*** lesdits moyens de rails (10) de guidage ou lesdits moyens de guide (11), lorsqu'ils sont disposés sur ladite structure porteuse (4) du véhicule (2, 3), sont associés à la fourche (21) de cette dernière.

8. Station de stockage suivant la revendication 6 ou 7, ***caractérisée en ce que*** ladite pente (15) de guidage est une pente constante ou sensiblement constante.

9. Station de stockage suivant l'une quelconque des revendications 6 à 8, ***caractérisée en ce que*** ladite pente (15) de guidage défini une direction de guidage correspondant au sens de roulage ou sensiblement au sens de roulage dudit véhicule.

10. Station de stockage suivant l'une quelconque des revendications 6 à 9, ***caractérisée en ce qu'***elle comprend des moyens d'actionnement (13) automatique desdits moyens de verrouillage (12) lorsque lesdits moyens de guide (11) atteignent la deuxième (17) extrémité de ladite pente (15) de guidage.

11. Station de stockage suivant l'une quelconque des revendications 6 à 10, ***caractérisée en ce qu'***elle comprend des moyens de libération (35) dudit véhicule (2, 3) par rapport au dit point fixe d'accrochage (6), comportant des moyens de déverrouillage (36) desdits moyens de verrouillage (12) de ladite structure porteuse (4) sur ledit point fixe d'accrochage.

12. Station de stockage suivant l'une quelconque des revendications 6 à 11, ***caractérisée en ce que*** lesdits moyens de rails (10) sont disposés sur ledit point fixe d'accrochage (6), et lesdits moyens de guide (11) sont disposés sur ladite structure porteuse (4) du véhicule (2, 3).

13. Station de stockage suivant l'une quelconque des revendications 6 à 12, ***caractérisée en ce que*** lesdits moyens de rails (10) comportent deux rainures (20) parallèles dont les entrées respectives sont évasées, lesdits moyens de guide (11) comportant deux reliefs (22) destinés respectivement à pénétrer dans les deux rainures par les entrées évasées de celles-ci.

14. Station de stockage suivant les revendications 12 et 13, ***caractérisée en ce que*** lesdits deux reliefs (22) sont disposés de part et d'autre d'un plan de symétrie longitudinal de la structure porteuse (4) dudit véhicule (2, 3).

15. Station de stockage suivant la revendication 14, ***caractérisée en ce que*** lesdits deux reliefs (22) sont disposés sous un panier (23) solidaire de la structure porteuse (4) du véhicule (2, 3), et **en ce que** lesdits moyens de rails (10) adoptent la forme de canaux ouverts vers le haut.

16. Station de stockage suivant l'une quelconque des revendications 6 à 15, ***caractérisée en ce que*** lesdits moyens de verrouillage (12) comportent un doigt (26) vertical solidaire de l'un des éléments point fixe d'accrochage (6) ou structure porteuse (4) du véhicule (2, 3), apte à coopérer avec une gâche (27) mobile solidaire de l'autre desdits éléments point fixe d'accrochage ou structure porteuse du véhicule, en vue de verrouiller la structure porteuse du véhicule au dit point fixe d'accrochage.

17. Station de stockage suivant la revendication 16, ***caractérisée en ce que*** ledit doigt (26) est solidaire de la structure porteuse (4) du véhicule (2, 3), et comporte une extrémité inférieure (28) fixée à ladite structure porteuse et une extrémité supérieure (29) libre, ladite gâche (27) mobile étant disposée sur ledit point fixe d'accrochage (6).

18. Station de stockage suivant les revendications 13 et 17, ***caractérisée en ce que*** ledit doigt (26) est disposé dans le plan longitudinal de symétrie de la structure porteuse (4) du véhicule (2, 3), entre lesdits moyens de guide (11) définis par les deux reliefs (22).

19. Station de stockage suivant l'une quelconque des revendications 6 à 18, ***caractérisée en ce que*** lesdits moyens de rails (10), lesdits moyens de guide (11), et lesdits moyens de verrouillage (12) sont agencés en sorte de coopérer ensemble en vue d'assurer l'immobilisation de la structure porteuse (4) par rapport au dit point fixe d'accrochage (6) lorsque les moyens de verrouillage sont actionnés.

20. Station de stockage suivant les revendications 15, 18, et 19, ***caractérisée en ce que*** lesdits moyens de rails (10) et ladite gâche (27) mobile sont disposés respectivement au dessus et au dessous d'une traverse (18) fixe solidaire du point fixe d'accrochage (6), horizontale ou sensiblement horizontale, la structure porteuse (4) du véhicule (2, 3) se répartissant en partie au dessus et au dessous de ladite traverse en sorte d'être liée à celle-ci lorsque les moyens de verrouillage (12) sont actionnés.

21. Station de stockage suivant l'une quelconque des revendications 6 à 20, ledit véhicule comprenant en outre :
- des moyens d'antivol (31) associés à la structure porteuse (4) dudit véhicule (2, 3) et dotés d'une serrure (32) à clé,
- des moyens de clé (33) pour actionner lesdits moyens d'antivol via ladite serrure à clé,
***caractérisée en ce que*** ladite station de stockage comprend :
- des moyens de sécurisation (34) desdits moyens de clé lorsque ces derniers sont introduits dans la serrure, coopérant avec lesdits moyens de clés lorsque ledit véhicule est en position de verrouillage sur le point fixe d'accrochage, en vue d'empêcher leur retrait de la serrure.

22. Station de stockage suivant l'une quelconque des revendications 6 à 21, ledit véhicule comprenant en outre :
- des moyens de motorisation électrique,
- des moyens d'alimentation électrique rechargeable desdits moyens de motorisation électrique,
ladite station de stockage comprenant des moyens d'alimentation électrique desdits moyens d'alimentation électrique rechargeables du véhicule,
***caractérisée en ce que*** ladite station de stockage comprend :
- des moyens de connexion électrique par contacts entre lesdits moyens d'alimentation électrique de la station et lesdits moyens d'alimentation électrique rechargeables du véhicule, comportant des premiers plots électriques fixés sur lesdits moyens de rail de guidage et des deuxièmes plots électriques fixés sur lesdits moyens de guide, aptes à entrer en contacts lorsque ledit véhicule est en position de verrouillage sur ledit point d'accrochage.

23. Station de stockage suivant l'une quelconque des revendications 6 à 22, ***caractérisée en ce que*** ledit véhicule comprend en outre des moyens d'identité, et **en ce que** ladite station de stockage comprend des moyens de lecture (40) desdits moyens d'identité, lorsque ledit véhicule (2, 3) est en position de verrouillage.
